# NEUE EUROPÄISCHE PATENTSCHRIFT

(11) **EP 1 893 855 B2**
(45) Veröffentlichungstag und Bekanntmachung des Hinweises auf die Entscheidung über den Einspruch: **27.08.2014**
(45) Hinweis auf die Patenterteilung: 01.09.2010
(21) Anmeldenummer: 06743364.9
(22) Anmeldetag: 21.04.2006
(51) Int. Cl.: F02B 37/16, F16K 31/06, F16K 1/42, F16K 1/36

(54) **BYPASSVENTIL FÜR VERBRENNUNGSKRAFTMASCHINEN**
BYPASS VALVE FOR INTERNAL COMBUSTION ENGINES
SOUPAPE DE DERIVATION POUR MOTEURS A COMBUSTION INTERNE

(30) Priorität: 17.06.2005 DE 102005028141
(43) Veröffentlichungstag der Anmeldung: 05.03.2008
(73) Patentinhaber: ROBERT BOSCH GMBH, 70442 Stuttgart (DE)
(72) Erfinder: HEZEL, Bruno, 70565 Stuttgart (DE); LAUE, Harald, 73733 Esslingen (DE)
(86) Internationale Anmeldenummer: PCT/EP2006/061736
(87) Internationale Veröffentlichungsnummer: WO 2006/133986

(56) Entgegenhaltungen:
- EP-B1- 0 416 339
- DE-A1- 2 527 748
- DE-A1- 10 020 041
- DE-A1- 10 251 981
- GB-A- 2 103 391
- GB-A- 2 338 050
- US-B1- 6 682 316
- PATENT ABSTRACTS OF JAPAN vol. 1997, no. 01, 31 January 1997 (1997-01-31) & JP 08 232669 A (H K S:KK), 10 September 1996 (1996-09-10)

## Beschreibung

Die Erfindung bezieht sich auf ein Bypassventil für Verbrennungskraftmaschinen, insbesondere auf solche Verbrennungskraftmaschinen, die mit einer Ladeeinrichtung versehen sind gemäß des Oberbegriffes des Patentanspruches 1.

### Stand der Technik

DE 100 20 041 A1 bezieht sich auf einen Bypassventilkörper für Turbo-Otto-Brennkraftmaschinen. Mittels des Bypassventilkörpers wird eine Verbindung der Druckseite mit der Ansaugseite einer Ladedruckpumpe hergestellt. Der Bypassventilkörper umfasst ein Gehäuse, innerhalb dessen eine Ventilstange mittels einer Antriebseinheit verschiebbar ist, wobei auf der Ventilstange ein Ventilkopf mit einem Ventilschließteil angeordnet ist. DerVenlilkopfund die Ventilstange weisen jeweils zumindest eine Druckausgleichsbohrung auf. Als Antriebseinheit dient ein elektrisch betätigbares Antriebssystem. Das elektrisch betätigbare Antriebssystem ist bevorzugt ein elektromagnetischer Antrieb. Zwischen dem Gehäuse und dem Ventilkopf ist eine Membran mit einer umlaufenden Dichtlippe als Ventilschließteil angeordnet. Eine Verbindung zwischen der Ventilstange und dem Ventilkopf ist als kardanisches Kugelgelenk ausgelegt.

Bei aufgeladenen Verbrennungskraftmaschinen sind bei schnellen negativen Lastwechseln, wie sie beim Schließen einer Drosselklappe auftreten, aus dem volllastnahen Bereich Maßnahmen erforderlich, um ein Abreißen der Luftströmung am Verdichterrad einer z. B. als Abgasturbolader ausgebildeten Aufladeeinrichtung zu vermeiden. Ohne diese Maßnahmen würde sich eine unzulässige akustische Belästigung, im Extremfall sogar eine Beschädigung am Verdichterrad bzw. an seinen Axiallagern einstellen. Zur Vermeidung dieser Effekte wird in dieser Betriebssituation ein Bypasssystem zum Verdichterteil der Aufladeeinrichtung geöffnet, welches dem Verdichterteil erlaubt, den Luftvolumenstrom ohne große Unstetigkeiten pumpfrei, dies bedeutet ohne Strömungsabriss, abzubauen.

Bei der Lösung gemäß des Standes der Technik sind ein elektrischer Antrieb und eine druckausgeglichene Membran vorgesehen. Als elektrischer Antrieb wird eine Spulen-Ankerkombination mit einer Tauchstufe eingesetzt. Mit dem Anker des elektrischen Antriebes ist eine Membran verbunden, die eine Strömungsstrecke durch eine Dichtgeometrie trennt. Da an einer Seite ein Überdruck bis zu 2 bar auftreten kann, ist die Membran im Wesentlichen druckausgeglichen ausgebildet. Der Raum unterhalb der Membran wird mit dem Raum vor der Dichtgeometrie kurzgeschlossen, was dazu führt, dass die Membran mit nur wenig Magnetkraft - aufgebracht durch die Spule des elektrischen Antriebes - betätigt werden kann. Dies hat den Vorteil, dass der elektrische Antrieb relativ kleinbauend ausgelegt werden kann.

Da die Anordnung gemäß des Standes der Technik z. B. an einer als Abgasturbolader ausgebildeten Ladeeinrichtung montiert werden kann, müssen sowohl der elektrische Antrieb als auch die bewegten Massen für Beschleunigungen von bis zu 40 g ausgelegt sein. Damit bei einer Anregung von außen der dichtende Sitz der Membran gewährleistet ist, wird die Membran mittels einer Feder in den Dichtsitz gestellt. Die Membran führt bei einer Betätigung einen Hub von einigen Millimetern aus. Um dies zu erreichen, ist die Membran als eine Rollmembran mit einem Wulst ausgebildet.

Nachteilig bei dieser Lösung ist der Umstand, dass die Membran als Rollmembran ausgestaltet ist. Da die Rollmembran aufgrund ihrer Montageposition an einer Verbrennungskraftmaschine sehr hohen Temperaturen ausgesetzt ist, ist die Membran aus einem sehr hochwertigen Eastomermaterial herzustellen. Das Elastomermaterial muss einerseits resistent gegen Kraftstoffe und andere Motorraummedien sein und andererseits in einem Temperaturbereich von -40°C bis +160°C beständig sein. Ferner ist die Membran im Laufe ihrer Standzeit etwa 1,5 Millionen Lastspielen ausgesetzt. Dies stellt an das Walkverhalten einer derartigen als Rollmembran ausgebildeten Membran sehr hohe Anforderungen. Das Walkverhalten einer Membran ist abhängig von den Langzeiteigenschaften des eingesetzten Elastomermaterials, welche durch entsprechende Einsatzbedingungen, insbesondere der Temperatur und der Anzahl der ausgeführten Lastspiele, über die Lebenszeit der Membran beständig abnimmt, wobei es im Extremfall bei Erschöpfung der elastischen Eigenschaften des Membranmaterials zum Versagen der Membran kommen kann.

JP 08 232669 A zeigt ebenfalls ein Bypassventil für Verbrennungskraftmaschinen zur Verbindung der Druckseite mit der Ansaugseite einer Aufladeeinrichtung. Dieses Bypassventil verwendet als Steller eine Unterdruckdose, die eine druckbeaufschlagte Membran aufweist, welche auf einen axial verschiebbaren Kolben einwirkt. Weiterhin ist ein Ventilgehäuse vorgesehen, in dem eine mit dem Kolben zusammenwirkende Schliesskomponente bewegbar aufenommen ist, welche Schliesskomponente einen in einem Strömungskanal bewegbaren, druckbeaufschlagten Ventilkörper und ein schaltbares Dichtelement aufweist, wobei in einer ersten Schalftstufe der Schliesskomponente das Dichtelement durch den Steller zur Freigabe mindestens einer Bohrung zu einem abströmseitigen Abschnitt des Strömungskanals im Ventilkörper aus diesem zurückgestellt ist und in einer zweiten Schaltstufe der Schliesskomponente der Ventilkörper eine Strömungsquerschnitt zu dem abströmseitigen Abschnitt des Strömungskanals freigibt.Bei diesem Bypassventil sind zum Erreichend der zweiten Schalftstufe von dem Steller erhebliche Kräfte aufzubringen, was sich nachteilig auf die Zuverlässigkeit ienes solchen Bypassventils auswirkt.

### Darstellung der Erfindung

Der Erfindung liegt daher die Aufgabe zugrunde, ein Bypassventil bereitzustellen, welches hinsichtlich der durchzuführenden Lastspiele über die Standzeit des Bypassventiles eine hohe Dichtheit gewährleistet.

Erfindungsgemäß wird das Bypassventil als eine zweistufige Anordnung ausgebildet, welche einen Ventilkörper mit einer Dichtung aufweist sowie eine Dichtplatte, welche mit dem Anker des elektrischen Antriebes fest verbunden ist und welche mittels einer Druckfeder an den Ventilkörper angestellt wird.

Bei der vorgeschlagenen Lösung dichtet zum einen der Ventilkörper in Axialrichtung gegen das Gehäuse und zum anderen einen Strömungskanal der Aufladeeinrichtung mit einer am Ventilteller angespritzten Dichtung ab. Somit übernimmt der Ventilkörper als ein Bauteil eine doppelte Dichtfunktion.

Der Ventilkörper des vorgeschlagenen Bypassventils enthält eine Druckausgleichsbohrung, welche sich zum Druckbereich des Abgasturboladers hin erstreckt, so dass sich der aufgebaute Ladedruck unterhalb des Ventilkörpers im Gehäuse des Bypassventils im Bereich des Antriebes ausbreiten kann. Da die projezierte Fläche unterhalb des Ventilkörpers größer als eine über dem Ventilkörper liegende Fläche zum Druckbereich des Abgasturboladers hin ist, wird der Ventilkörper an die jeweiligen Dichtungen gepresst und dichtet das Bypassventil zum Strömungskanal hin ab.

Damit lässt sich erreichen, dass der Ventilkörper aus Kunststoff oder aus metallischem Material hergestellt werden kann und somit gegen Druckeinflüsse, Temperatureinflüsse sowie Blow-by-Bestandteile unempfindlich ist. Die eingesetzten Dichtungen sind derart ausgelegt, dass der Einfluss von Druck und Temperatur auf die eingesetzten Elastomermaterialien gering ist. Die Elastomermaterialien werden über die Standzeit des Bypassventiles nur auf Druck hin belastet. Das erfindungsgemäß vorgeschlagene Bypassventil zeichnet sich durch Dauerbeständigkeit des Ventilkörpers hinsichtlich der über die Lebensdauer des Bypassventiles erforderlichen und auftretenden Lastspiele aus.

### Zeichnen

Anhand der Zeichnung wird die Erfindung nachstehend detaillierter beschrieben.

Es zeigt:
- Figur 1: eine schematische Wiedergabe einer an einer Verbrennungskraftmaschine eingesetzten Aufladeeinrichtung,
- Figur 2: einen Schnitt durch das erfindungsgemäß vorgeschlagene Bypassventil,
- Figur 3.1: das Bypassventil gemäß der Darstellung in Figur 2 in seiner Dichtstellung,
- Figur 3.2: das Bypassventil gemäß der Darstellung in Figur 2 in einer ersten Schaltstufe,
- Figur 3.3: das Bypassventil gemäß der Darstellung in Figur 2 in einer zweiten Schaltstellung,
- Figur 4.1: eine weitere Ausführungsvariante des erfindungsgemäß vorgeschlagenen Bypassven- tils in einem einen Druckaufbau innerhalb des Bypassventils ermöglichenden Zustand,
- Figur 4.2: das Bypassventil gemäß der Darstellung in Figur 4.1 in einer ersten Schaltstufe und
- Figur 4.3: das Bypassventil gemäß der Darstellung in Figur 4.1 in einer zweiten Schaltstellung.

### Ausführunesbeispiele

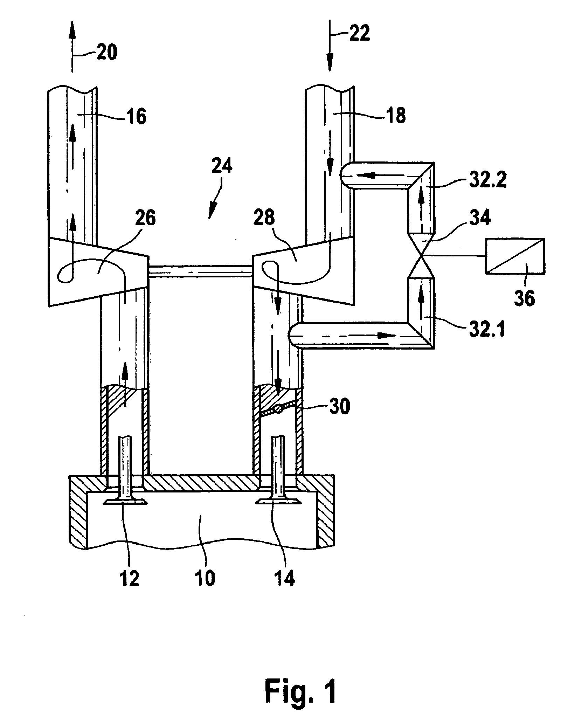

Der Darstellung gemäß Figur 1 ist in schematischer Weise eine Aufladeeinrichtung zu entnehmen, die einer Verbrennungskraftmaschine zugeordnet ist.

Die Verbrennungskraftmaschine, sei es eine selbstzündende oder sei es eine fremdgezündete Verbrennungskraftmaschine, umfasst mindestens einen Brennraum 10. Der Gaswechsel im Brennraum 10 der Verbrennungskraftmaschine erfolgt über mindestens ein Auslassventil 12 und mindestens ein Einlassventil 14. Über das mindestens eine Auslassventil 12 wird eine Abgasleitung 16 geöffnet oder verschlossen, so dass die Abgase aus dem Brennraum 10 in die Abgasleitung 16 strömen können. Mittels des mindestens einen Einlassventiles 14 wird eine Luftzufuhr 18 für Frischluft 22 geöffnet oder geschlossen. Innerhalb der Abgasleitung 16 befindet sich ein Turbinenteil 26 einer z. B. als Abgasturbolader ausbildbaren Aufladeeinrichtung 24. Die Aufladeeinrichtung 24 umfasst darüber hinaus einen Verdichterteil 28, der mit Frischluft beaufschlagt wird. Zwischen dem Verdichterteil 28 und dem mindestens einen Einlassventil 14 zum Brennraum 10 der Verbrennungskraftmaschine befindet sich eine Drosselklappe 30. Ein Strömungskanal 32.1, 32.2 (Bypasskanal) zweigt hinter der Drosselklappe 30 ab und mündet vor dem Verdichterteil 28 der Aufladeeinrichtung 24. Im Strömungskanal 32.1, 32.2 ist ein Bypassventil 34 aufgenommen, welches durch einen in Figur 1 schematisch angedeuteten Steller 36 betätigt wird. Mit 32.1 ist der zuströmseitige Abschnitt des Strömungskanales, mit Bezugszeichen 32.2 ist der abströmseitige Abschnitt des Strömungskanales hinter dem Bypassventil 32 bezeichnet.

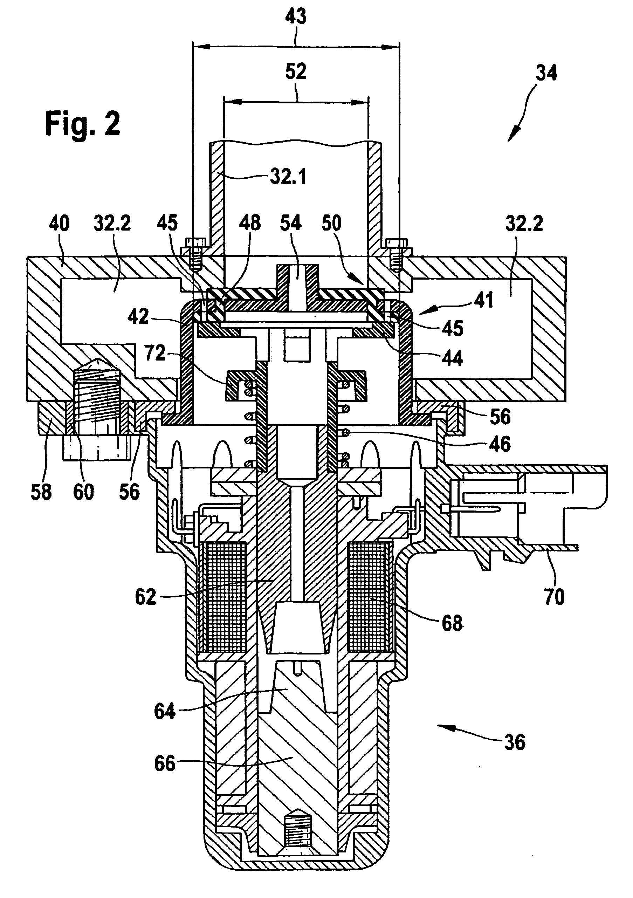

Der Darstellung gemäß Figur 2 ist das erfindungsgemäß vorgeschlagene Bypassventil in einer Schnittdarstellung zu entnehmen.

Ein Ventilgehäuse 40 des Bypassventils 34 kann sowohl Bestandteil des Bypassventils 34 als auch Bestandteil des Gehäuses der Aufladeeinrichtung 18 wie z. B. eines Abgasturboladers sein. Im Ventilgehäuse 40 befindet sich eine Schließkomponente 41, die einerseits einen Ventilkörper 42 aufweist und andererseits ein Dichtelement 44 umfasst. Der Ventilkörper 42 ist glockenförmig ausgebildet und umschließt das scheibenförmig ausgebildete Dichtelement 44, welches z. B. als eine Dichtplatte ausgebildet sein kann. Das Dichtelement 44 ist in der Darstellung gemäß Figur 2 an einem Anker 62 des Stellers 36 aufgenommen. Der Steller 36 kann z. B. als ein Elektromagnet ausgebildet sein, der eine Spule 68 und den Anker 62 umfasst. Das vom z. B. glockenförmig ausgebildeten Ventilkörper 42 umschlossene Dichtelement 44 bildet mit diesem eine mehrteilig ausgebildete Schließkomponente 41. Der Anker 62, an welchem das Dichtelement 44 aufgenommen ist, wird durch eine Druckfeder 46 beaufschlagt. Die Druckfeder 46 stützt sich einerseits am Ventilgehäuse 40 des Bypassventils 34 und andererseits an einem Stützring 72 des Ankers 62 ab. Durch die Druckfeder 46 wird der Anker 62 und damit das Dichtelement 44 an die Unterseite des Ventilkörpers 42 der Schließkomponente 41 angestellt. Wie Figur 2 entnehmbar ist, liegt die Oberseite der Dichtplatte 44 an mindestens einer Dichtung 48, die in den Ventilkörper 42 eingelassen ist, an. Das Dichtelement 44 und der Stützring 72, in welchen sich die Druckfeder 46 abstützt, werden bevorzugt als ein Kunststoffspritzgussteil ausgebildet, welches in einem Herstellungsschritt gespritzt wird. Das Bauteil, das Dichtelement 44 und den Stützring 72 umfassend, wird auf den Anker 62 aufgerammt. Wie aus der Darstellung gemäß Figur 2 hervorgeht, umfasst der Ventilkörper 42 auf seiner oberen Seite eine zusätzliche, ringförmig ausgebildete Dichtung 48. Zur Verbesserung ihrer Befestigung am Ventilkörper 42 ist diese ringförmige Dichtung 48 an mehreren Stellen durch den Ventilkörper 42 gespritzt. Zum anderen ist die ringförmig ausgebildete Dichtung 48 auf der Innenseite großflächig gegen Herausgleiten gesichert. In der Decke des Ventilkörpers 42 und das an diesem befestigte ringförmige Dichtelement 48 durchsetzend, befinden sich Bohrungen 45. Diese Bohrungen 45 werden gemäß der Darstellung in Figur 2 durch das plattenförmig ausgebildete Dichtelement 44 abgedichtet. Über diese Bohrungen 45 im ringförmig ausgebildeten Dichtelement 48 und in der Decke des Ventilkörpers 42 kann bei rückgestelltern Dichtelement 44 gemäß einer untenstehend näher beschriebenen ersten Schaltstufe des Bypassventiles 34 ein Einströmen von Luft in den Strömungskanal 32 herbeigeführt werden.

Der Steller 36 zur Betätigung des Bypassventiles 34 kann in einem Gehäuse angeordnet sein, welches mit dem in Figur 2 dargestellten Ventilgehäuse 40 verschraubt ist. Der Anker 62 und das plattenförmig ausgebildete Dichtelement 44 werden von der Druckfeder 46 beaufschlagt zur Abdichtung an das Ventilgehäuse 40 gedrückt. Mindestens eine Buchse 60 ist in einem Gehäuseflansch 58 eingelassen. Diese Buchse 60 wirkt als Distanzbuchse und dient zur Stabilisierung einer Schraubverbindung, angedeutet durch die in Figur 2 dargestellte Schraube zwischen dem Ventilgehäuse 40 und einem Gehäuseflansch 58.

Durch die ringförmige Dichtung 48 der Schließkomponente 41 wird ein Dichtbereich 50 des Bypassventils 34 verschlossen. Dadurch ist ein Überströmen der dem Bypassventil 34 zuströmenden Luft in den abströmseitigen Abschnitt 32.2 des Strömungskanals ausgeschlossen. Beim Strömen der Luft durch den zuströmseitigen Abschnitt 32.1 des Strömungskanals wirkt der Druck einerseits auf die Fläche des Dichtbereiches 50. Aufgrund des Umstandes, dass im Ventilkörper 42 eine Druckausgleichsbohrung 54 ausgebildet ist, wirkt der Druck auch unterhalb des Ventilkörpers 42. Die projezierte Fläche 43 unterhalb des Ventilkörpers 42 ist jedoch größer verglichen mit der Fläche für Druckausgleich 52 an der Außenseite des Ventilkörpers 42, so dass der Ventilkörper 42 eine zusätzliche Schließkraft in Richtung auf den Dichtsitz erfährt.

Am Ventilkörper 42 der Schließkomponente 41 befindet sich auf der Oberseite die mit Bezugszeichen 52 identifizierte Fläche für den Druckausgleich. Da die projezierte Fläche 43 auf der Unterseite des Ventilkörpers 42 verglichen mit der durch Bezugszeichen 52 identifizierten Fläche für den Druckausgleich größer ist, wird im geschlossenen Zustand des Ventilkörpers 42 das Dichtelement 44 zusätzlich in den Dichtbereich 50 gedrückt.

Im Ventilkörper 42 der Schließkomponente 41 befindet sich darüber hinaus eine Anzahl von Bohrungen 45, die bei ihrer Freigabe ein Überströmen von Luft in den abströmseitigen Abschnitt 32.2 des Strömungskanals (Bypasskanal der Aufladeeinrichtung 24) zulassen. Die Bohrungen 45 in der Decke des Ventilkörpers 42 sind in der Darstellung gemäß Figur 2 durch das plattenförmig ausbildbare Dichtelement 44 axial verschlossen. Schließlich enthält der Ventilkörper 42 der Schließkomponente 41 eine Druckausgleichsbohrung 54. Der Strömungsquerschnitt der Druckausgleichsbohrung 54, durch welchen die im zuströmseitigen Abschnitt 32.1 des Strömungskanales strömende Luft dem Bypassventil 34 zuströmt, ist kleiner, verglichen mit dem Strömungsquerschnitt sämtlicher Bohrungen 45 im Ventilkörper 42. An der Unterseite des in dem Ausführungsbeispiel gemäß Figur 2 glockenförmig ausgebildeten Ventilkörpers 42 befindet sich eine Axialdichtung 56, welche das Ventilgehäuse 40 und das Gehäuse des Stellers 36 mit dem darin aufgenommenen Ventilkörper 42 abdichtet.

Am Ventilgehäuse 40 ist ein Gehäuseflansch 58 ausgebildet, in welchen mindestens eine Befestigungsbuchse 60 eingelassen ist.

Unterhalb des Ankers 62 befindet sich eine Tauchstufe 64, die an einem Stellerkern 66 konisch ausgebildet ist. Der innerhalb des Ventilgehäuses 40 in vertikaler Richtung bewegbare Anker 62 ist von der Spule 68 umschlossen, welche über Steckerkontakte 70 mit einer Spannungsquelle verbunden ist.

In der Darstellung gemäß Figur 2 ist die zweistufig ausgebildete Schließkomponente 41 in ihrer Schließstellung dargestellt. In diesem Zustand ist das scheibenförmig ausgebildete Dichtelement 44 bei nicht bestromter Spule 68 durch die Druckfeder 46 an die mindestens eine Dichtung 48 des Ventilkörpers 42 angestellt. Über die Druckausgleichsbohrung 54 in das Innere des Bypassventils 34 einströmende Luft vermag in dieser Schließstellung des Ventiles aufgrund des geschlossenen Dichtbereiches 50 und der durch das Dichtelement 44 verschlossenen Bohrungen 45 in der Stirnfläche des Ventilkörpers 42 nicht in den abströmseitigen Abschnitt 32.2 des Strömungskanales überzuströmen. Somit ist der Strömungskanal 32.1, 32.2 in der Schaltstellung des Bypassventiles 34 gemäß der Darstellung in Figur 2 geschlossen.

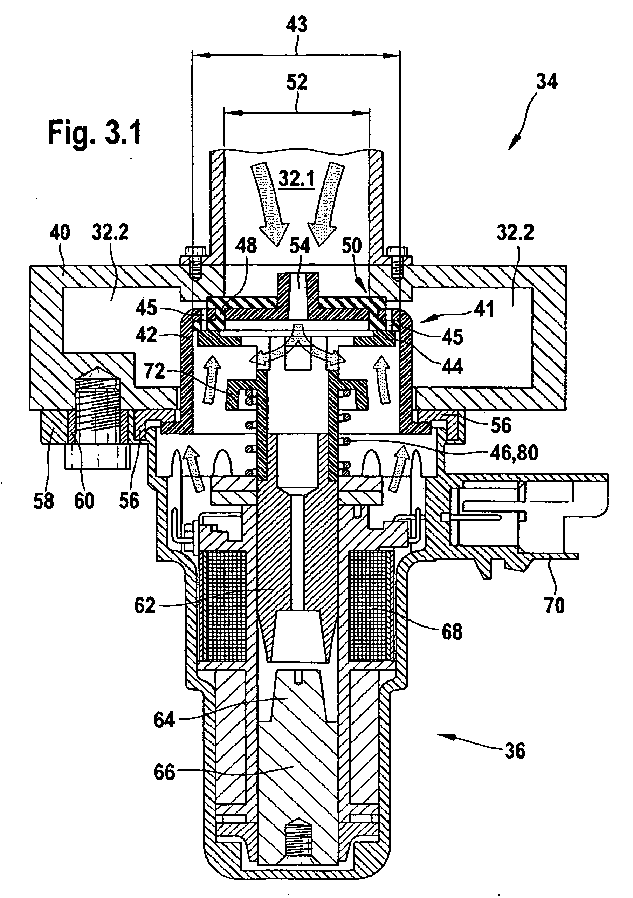

In Figur 3.1 ist der Druckaufbau im Bypassventil dargestellt.

Die Spule 68 des Stellers 36 ist nicht bestromt, so dass der Anker 62 mit daran aufgenommenem Dichtelement 44 aufgrund der expandierten Feder (Bezugszeichen 80) an das mindestens eine Dichtelement 48 an der Unterseite des z. B. glockenförmig ausgebildeten Ventilkörpers 42 angestellt ist. Durch die mindestens eine Dichtung 48 ist der Dichtbereich 50 zum zuströmseitigen Abschnitt 32.1 des Strömungskanales abgedichtet; ferner ist durch die Axialdichtung 56 das Ventilgehäuse 40 gegen die über die Druckausgleichsbohrung 54 eintretende Frischluft abgedichtet. Die Frischluft durchströmt die Druckausgleichsbohrung 54 und unterströmt den Ventilkörper 42. Das Dichtelement 44 wird von Luft umströmt und druckbeaufschlagt und ist bis auf die Abdichtung zu den Bohrungen 45 druckausgeglichen. Aufgrund der Axialdichtung 56 an der offenen Seite des z. B. glockenförmig ausbildbaren Ventilkörpers 42 ist der Eintritt von Luft in den abströmseitigen Abschnitt 32.2 des Strömungskanales nicht möglich. Somit dichtet der relativ zum Ventilgehäuse 40 bewegbare Ventilkörper 42 den zuströmseitigen Abschnitt 32.1 des Strömungskanals an zwei Dichtstellen, nämlich 50, 56, zuverlässig ab. Aus der Darstellung gemäß Figur 3.1 ist entnehmbar, dass die druckbeaufschlagte Fläche 52 kleiner ist als die projezierte Fläche 43 an der gegenüberliegenden Seite des Ventilkörpers 42.

Der Vollständigkeit halber sei erwähnt, dass die Bestromung der Spule 68 über die Steckerkontakte 70 erfolgt. Der Anker 62 enthält eine Öffnung, die komplementär zur Geometrie der Tauchstufe 64 des Stellerkerns 66 ausgebildet ist. In der in Figur 3.1 dargestellten Schließstellung wird bei nicht bestromter Spule 68 des Stellers 36 das scheibenförmig ausgebildete Dichtelement 44 an die Unterseite des Ventilkörpers 42 aufgrund des expandierten Zustandes 80 der Druckfeder 46 angestellt.

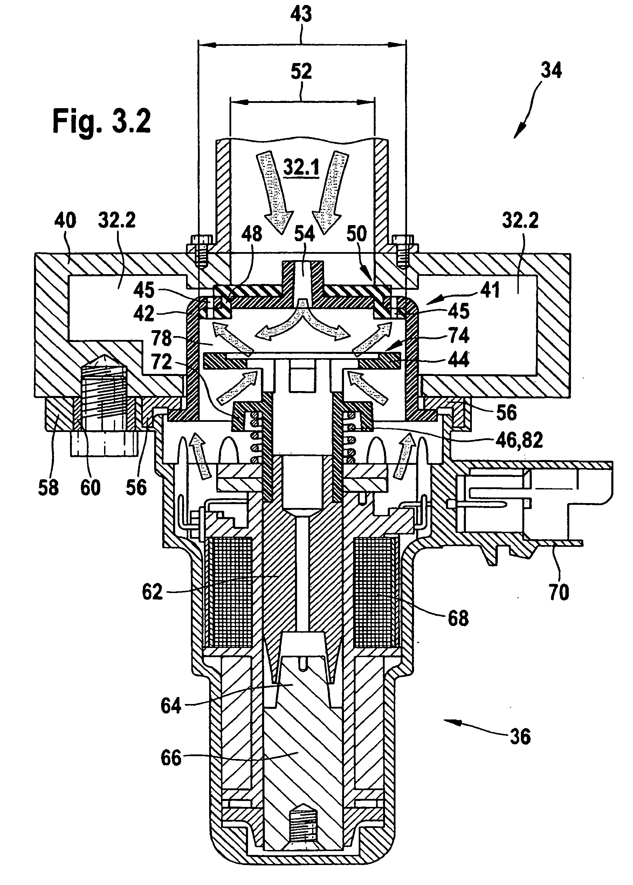

Figur 3.2 zeigt eine erste Schaltstufe der mehrteiligen Schließkomponente des erfindungsgemäß vorgeschlagenen Bypassventils.

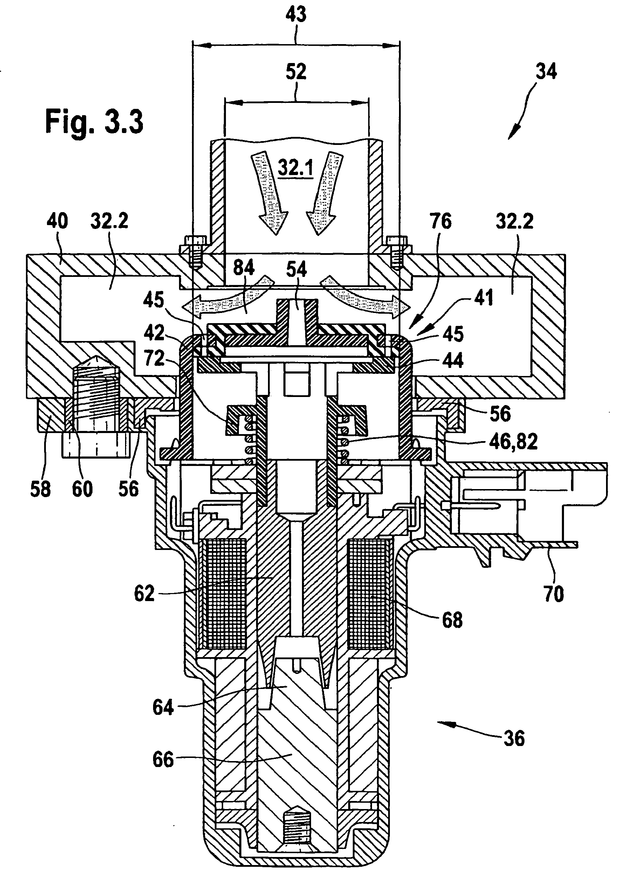

Aus der Darstellung gemäß Figur 3.2 geht hervor, dass bei Bestromung der Spule 68 des Stellers 36 der Anker 62 in die Spule 68 einfahrt und somit das Dichtelement 44 innerhalb des glockenförmig ausbildbaren Ventilkörpers 42 vertikal nach unten bewegt wird. In der der ersten Schaltstufe 74 entsprechenden Betriebsposition des Bypassventiles 34 liegt das scheibenförmig ausbildbare Dichtelement 44 nunmehr nicht mehr an der mindestens einen Dichtung 48 des Ventilkörpers 42 an. Dadurch bildet sich zwischen dem Dichtelement 44 und dem Ventilkörper 42 eine mit Bezugszeichen 78 bezeichnete Kammer. In die Kammer 78 strömt über die Druckausgleichsbohrung 54 Frischluft ein. Da in der ersten Schaltstufe 74 die in der Mantelfläche des Ventilkörpers 42 ausgebildeten, in den abströmseitigen Abschnitt 32.2 des Strömungskanals mündenden Bohrungen 45 freigegeben sind, strömt aus der Kammer 78 in dem der ersten Schaltstufe 74 entsprechenden Schaltzustand Luft in den abströmseitigen Abschnitt 32.2 des Strömungskanals ab. Aufgrund des Strömungsquerschnittes der Druckausgleichsbohrung 54 und der Summe der Strömungsquerschnitte der in der Mantelfläche des Ventilkörpers 42 ausgebildeten Vielzahl von kleinen Bohrungen sinkt der Druck in der Kammer 78 kontinuierlich, da weniger Frischluft in die Druckausgleichsbohrung 54 der Kammer 78 zuströmen kann als aus dieser in den abströmseitigen Abschnitt 32.2 des Strömungskanals abströmt. Ist der Druck, der auf die projezierte Fläche 43 des Ventilkörpers 42 wirkt, so weit abgesunken, dass der Druck oberhalb des Ventilkörpers 42, der auf die Fläche 52 für den Druckausgleich wirkt, größer ist, wird die in Figur 3.3 dargestellte zweite Schaltstufe 76 erreicht.

Figur 3.3 ist die zweite Schaltstufe des erfindungsgemäß vorgeschlagenen Bypassventils zu entnehmen. In der zweiten Schaltstufe 76 wird aufgrund des abgesunkenen Druckes, der auf die projezierte Fläche 43 des Ventilkörpers 42 wirkt, und des gleichzeitig auf die Fläche 52 wirkenden Druckes der Ventilkörper 42 komplett nach unten gedrückt. Dadurch wird ein Strömungsquerschnitt 84 in den abströmseitigen Abschnitt 32.2 des Strömungskanals vollständig geöffnet. Nun kann die der Schließkomponente 41 insgesamt zuströmende Luftmenge den Strömungskanal 32.1, 32.2 durchströmen. Da sich das Bypassventil 34 im Zustand der zweiten Schaltstufe 76 auf gleichem Druckniveau befindet, ist die Kraft der Druckfeder 46 ausreichend, das System bei Abschaltung der Spannung an der Spule 68 wieder zu schließen. Aus der Darstellung gemäß Figur 3.3 geht hervor, dass der Ventilkörper 42 einerseits den Strömungsquerschnitt 84 in den abströmseitigen Abschnitt 32.2 des Strömungskanals freigibt und andererseits teilweise in das Ventilgehäuse 40 eingefahren ist. Die Axialdichtung 56 befindet sich in der zweiten Schaltstufe 76 gemäß der Darstellung in Figur 3.3 nicht mehr in ihrer dichtenden Anlage am Ventilgehäuse 40, sondern ist durch den Ventilkörper 42 freigegeben.

Durch den Ventilkörper 42 der Schließkomponente 41 wird in der Schließstellung gemäß Figur 3.1 zum einen am Dichtbereich 50 der zuströmseitige Abschnitt 32.1 des Strömungskanals verschlossen und andererseits durch die Axialdichtung 56 das Ventilgehäuse 40 abgedichtet. Durch die Druckausgleichsbohrung 54 im Ventilkörper 42 der Schließkomponente 41 ist ein Druckausgleich zwischen der Ladeeinrichtung 24 und dem Bypassventil 34 möglich, so dass sich der Ladedruck auch unterhalb des Ventilkörpers 42 im Bereich des Stellers 36 ausbreiten kann. Da die projezierte Fläche 43 unterhalb des Ventilkörpers 42 größer ist als die Fläche 52 zum Druckausgleich am Ventilkörper 42, ist der Ventilkörper 42 an die jeweiligen Dichtungen im Dichtbereich 50 bzw. am Ventilgehäuse 40 gestellt, so dass der zuströmseitige Abschnitt 32.1 des Strömungskanals an zwei Stellen abgedichtet ist. Der Vorteil des erfindungsgemäß vorgeschlagenen Bypassventiles 34 liegt darin, dass der Ventilkörper 42 entweder aus einem Kunststoffmaterial oder aus einem metallischen Material hergestellt werden kann und so gegen die Betriebsparameterdrucktemperatur sowie insbesondere gegen Blow-by-Bestandteile unempfindlich ist. Die Dichtungen 48, 56 sind so ausgelegt, dass der Einfluss von Druck und Temperatur auf die eingesetzten Elastomerwerkstoffe gering ist. Ferner ist hinsichtlich der Krafteinleitung in die Dichtelemente 48 bzw. 56 festzuhalten, dass diese während des Betriebes des erfindungsgemäß vorgeschlagenen Bypassventiles 34 nur auf Druck belastet werden. Das erfindungsgemäß vorgeschlagene Bypassventil 34 kann insbesondere als Bypassventil an einer Aufladeeinrichtung 24 an einer Verbrennungskraftmaschine eingesetzt werden. Die Aufladeeinrichtung 24 kann dabei insbesondere als ein Abgasturbolader, als ein Druckwellenlader, ein Kompressor oder eine andere Aufladeeinrichtung beschaffen sein. Das Bypassventil 34 lässt sich ebenso gut an einer anderen Stelle im Ansaugtrakt einer Verbrennungskraftmaschine einsetzen.

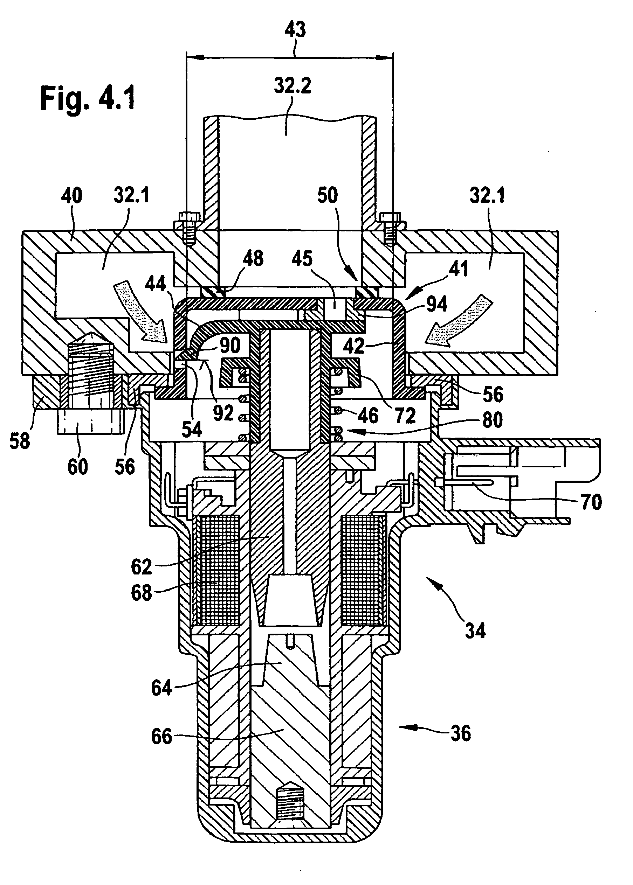

Im Gegensatz zur Ausführungsvariante des Bypassventils 34 gemäß der Figuren 2, 3.1, 3.2 und 3.3 ist bei dem Ausführungsbeispiel des Bypassventiles 34 gemäß der Figuren 4.1 bis 4.3 die Strömungsrichtung umgekehrt zur Strömungsrichtung wie in Figur 1 eingezeichnet. Aufgrund dessen sind im Ausführungsbeispiel gemäß der Figuren 4.1 bis 4.3 der zuströmseitige Abschnitt 32.1 des Strömungskanales und der abströmseitige Abschnitt 32.2 des Strömungskanales vertauscht, mithin wird das Bypassventil 34 im Ausführungsbeispiel gemäß der Figuren 4.1 bis 4.3 in umgekehrter Strömungsrichtung von Luft durchströmt.

Das Bypassventil 34 ist in der Darstellung gemäß Figur 1 in einem einen Druckaufbau ermöglichenden Schaltzustand dargestellt. Gemäß Figur 4.1 umfasst das Bypassventil 34 den Steller 36, der in einem Flansch 58 angeordnet ist und den Anker 62, die Tauchstufe 64 sowie den Stellerkern 66 und die Magnetspule 68 umfasst. Die Bestromung der Magnetspule 68 erfolgt über den seitlich am Ventilgehäuse 40 angeflanschten Stecker 70.

Die Schließkomponente 41 umfasst gemäß dieses Ausführungsbeispieles des Bypassventiles 34 den Ventilkörper 42 sowie das Dichtelement 44 in einer modifizierten Ausführungsform. Das Dichtelement 44 ist am Anker 62 aufgenommen. Der Anker 62 umfasst eine Stützfläche 72, an der sich die Druckfeder 46 abstützt. Die Druckfeder 46 ist in Figur 4.1 in ihrem expandierten Zustand 80 dargestellt und stellt das Dichtelement 44 in diesem Schaltzustand des Bypassventiles 34 an den Dichtbereich 50 im Ventilgehäuse 40 an. Die auf der Oberseite des Ventilkörpers 42 angebrachte Dichtung 48 verschließt den Dichtbereich 50, so dass keine Luft vom zuströmseitigen Abschnitt 32.1 in den abströmseitigen Abschnitt 32.2 des Strömungskanals (Bypasskanal) überströmen kann. In den Ventilkörper 42 der Schließkomponente 41 ist eine Dichtung 94 eingelassen, in welcher mindestens eine Bohrung 45 ausgebildet ist. Während des in Figur 1 dargestellten Schaltzustandes des Bypassventiles 34 ist diese mindestens eine Bohrung 45 durch die gegen die Dichtung 94 angestellte Dichtelement 44 verschlossen. In Abweichung von der Ausführungsform des Dichtelementes 44 im Ausführungsbeispiel gemäß der Figuren 2, 3.1 bis 3.3 umfasst das Dichtelement 44 mindestens einen Mitnehmer 90, an dem eine Aufsatzfläche 52 ausgebildet ist. Der mindestens eine Mitnehmer 90, der am Dichtelement 44 seitlich angebracht sein kann, ragt in eine Druckausgleichsbohrung 54 in der Mantelfläche des Ventilkörpers 42 der Schließkomponente 41 hinein. Bevorzugt wird das Dichtelement 44 derart ausgebildet, dass an seinem Umfang drei Mitnehmer 90 in einem Winkelversatz von 120° zueinander ausgebildet sind. Das Ventilgehäuse 40 des Bypassventiles 34 und der Befestigungsflansch 58 sind über eine Schraubverbindung, welche die Befestigungsbuchse 60 durchsetzt, miteinander kraftschlüssig verbunden. In den Befestigungsflansch 58 ist die Axialdichtung 56 eingelassen, welche zusammenwirkend mit dem Ventilkörper 42 der Schließkomponente 41 das Gehäuse des Bypassventiles 34 abdichtet.

Im in Figur 4.1 dargestellten Schaltzustand des Dichtelementes 44 erfolgt ein Druckausgleich zwischen dem zuströmseitigen Abschnitt 32.1 und dem Inneren des Ventilkörpers 41 durch die Druckausgleichsbohrung 54. Diese ist durch den mindestens einen Mitnehmer 90 partiell freigegeben, so dass vom zuströmseitigen Abschnitt 32.1 des Strömungskanales über die Druckausgleichsbohrung 54 Luft in den Innenraum des Ventilkörpers 42 einströmt. Das Druckniveau im zuströmseitigen Abschnitt 32.1 des Strömungskanals herrscht somit auch im Inneren des Ventilkörpers 42, der in diesem Zustand aufgrund der expandierten Feder 80 an die Unterseite des Ventilkörpers 42 angestellt ist, dessen projezierte Fläche durch Bezugszeichen 43 identifiziert ist.

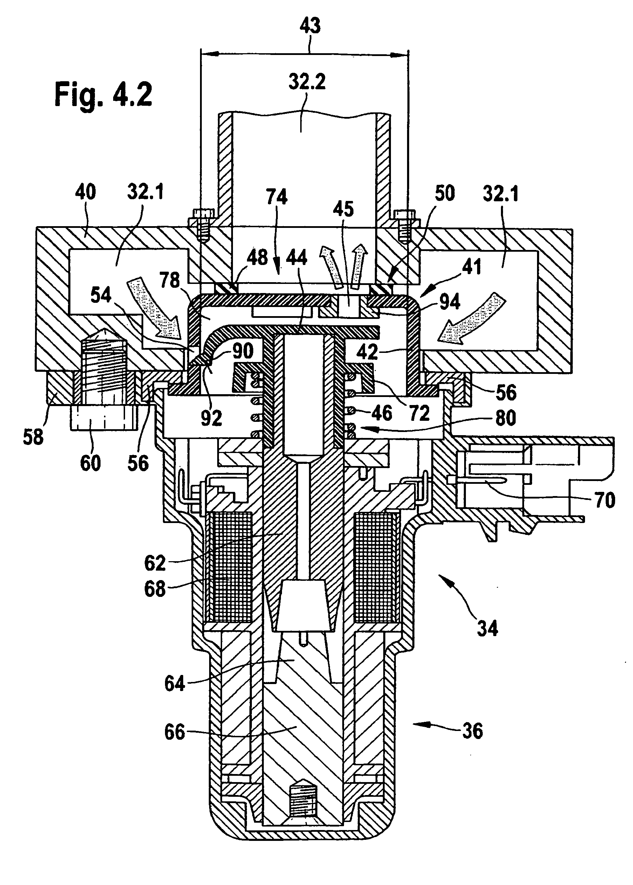

Figur 4.2 zeigt die erste Schaltstellung des Bypassventiles gemäß des Ausführungsbeispieles in Figur 4.1. Aus der Darstellung gemäß Figur 4.2 geht hervor, dass in diesem Schaltzustand das Dichtelement 44 gegen die Federwirkung der Druckfeder 46 von der Dichtung 94, welche in den Deckel des Ventilkörpers 42 eingelassen ist, abgestellt ist. Gleichzeitig liegt die Aufsatzfläche 92 des mindestens einen Mitnehmers 90 auf der Umrandung der Druckausgleichsbohrung 54 an, so dass vom zuströmseitigen Abschnitt 32.1 des Strömungskanales Luft über die geöffnete Druckausgleichsbohrung 54 in die Kammer 78 nachströmen kann. Aufgrund des Umstandes, dass die Oberseite des Dichtelementes 44 von der Dichtung 94 in der Decke des Ventilkörpers 42 abgestellt ist, strömt Luft über die eine Bohrung 45 in der Dichtung 94 in den abströmseitigen Abschnitt 32.2 des Strömungskanales (Bypasskanal). Die Axialdichtung 56 und der Ventilkörper 42 dichten das Bypassventil 34 nach wie vor ab. Dies wird dadurch erreicht, dass das Dichtelement 44 im in Figur 4.2 dargestellten 1. Schaltzustand 74 relativ zum Ventilkörper 42 bewegbar ist. In der in Figur 4.2 dargestellten 1. Schaltstufe 74 des Bypassventiles 34 stellt sich ein Druckausgleich zwischen dem Innenraum des Ventilkörpers 42 und dem zuströmseitigen Abschnitt 32.1 des Strömungskanales (Bypasskanal) ein.

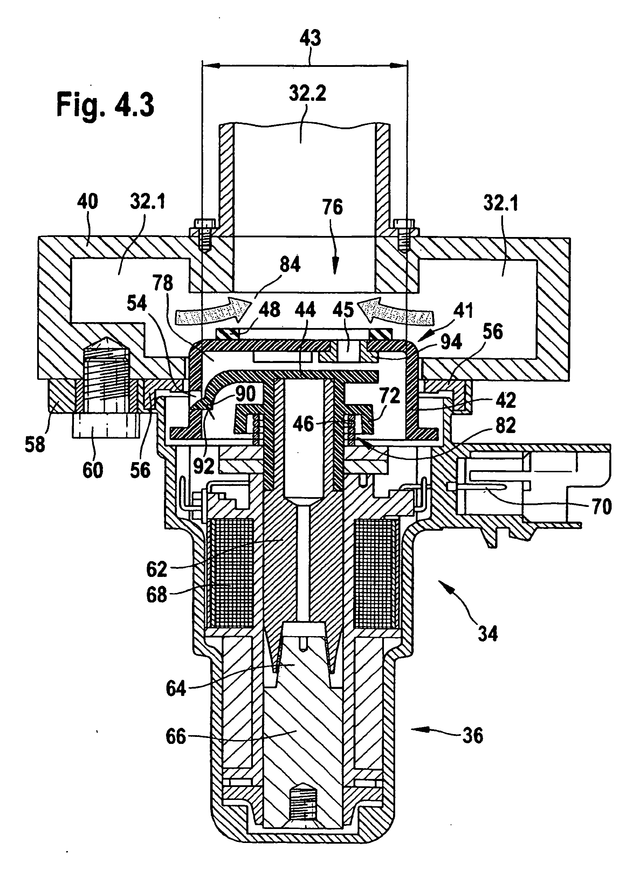

Der Darstellung gemäß Figur 4.3 ist die 2. Schaltstufe des Bypassventiles 34 gemäß des Ausfiihrungsbeispieles nach > Figur 4.1 zu entnehmen.

Durch Bestromung der Magnetspule 68 des Stellers 36 des Bypassventiles 34 wird der Anker 62 in die Magnetspule 68 hineingezogen, wodurch der Ventilkörper 42 samt Dichtelement 44 in den Befestigungsflansch 58 einfährt. Das in der 1. Schaltstufe 74 gemäß Figur 4.2 an den Dichtbereich 50 angestellte Dichtelement 48 an der Oberseite des Ventilkörpers 42 der Schließkomponente 41 wird vom Dichtbereich 50 komplett zurückgestellt, so dass Luft vom zuströmseitigen Abschnitt 32.1 des Strömungskanales über den freigegebenen Strömungsquerschnitt 84 in den abströmseitigen Abschnitt 32.2 des Strömungskanals (Bypasskanal) überströmen kann.

In der in Figur 4.3 dargestellten 2. Schaltstufe 76 des Bypassventiles 34 wird die Schließkomponente 41, den Ventilkörper 42 und das Dichtelement 44 mit mindestens einem Mitnehmer 90, aufgrund der Bestromung der Magnetspule 68 zurückgestellt, so dass die das Dichtelement 44 über die Stützscheibe 72 druckbeaufschlagende Druckfeder 46 ihren komprimierten Zustand 82 annimmt. In der 2. Schaltstufe 76 des Bypassventiles 34 ist der Ventilkörper 42 von der Axialdichtung 56, die in den Befestigungsflansch 58 eingelassen ist, zurückgestellt.

### Bezugszleichenliste

- 10: Brennraum Verbrennungs- kraftmaschine
- 12: Auslassventil
- 14: Einlassventil
- 16: Abgasleitung
- 18: Luftzufuhrleitung
- 20: Abgas
- 22: Frischluft
- 24: Aufladeeinrichtung
- 26: Turbinenteil
- 28: Verdichterteil
- 30: Drosselklappe
- 32.1: zuströmseitiger Abschnitt Strömungskanal (Bypasskanal)
- 32.2: abströmseitiger Abschnitt Strömungskanal (Bypasskanal)
- 34: Bypassventil
- 36: Steller
- 40: Ventilgehäuse
- 41: Schließkomponente
- 42: Ventilkörper
- 43: projezierte Fläche
- 44: Dichtelement
- 45: Bohrungen zum abströmseiti- gen Abschnitt 32.2 des Strö- mungskanals
- 46: Druckfeder
- 48: Dichtung Ventilkörper
- 50: Dichtbereich
- 52: Fläche für Druckausgleich
- 54: Druckausgleichsbohrung
- 56: Axialdichtung
- 58: Flansch
- 60: Befestigungsbuchse
- 62: Anker
- 64: Tauchstufe
- 66: Stellerkern
- 68: Magnetspule
- 70: Steckerkontakte
- 72: Stützfläche
- 74: 1. Schaltstufe (Fig. 3.2)
- 76: 2. Schaltstufe (Fig. 3.3)
- 78: Kammer
- 80: expandierte Feder
- 82: komprimierte Feder
- 84: freigegebener Strömungsquer- schnitt
- 90: Mitnehmer
- 92: Aufsatzfläche
- 94: Dichtung

## Patentansprüche

1. Bypassventil für Verbrennungskraftmaschinen zur Verbindung der Druckseite mit der Ansaugseite einer Aufladeeinrichtung (24) mit einem Steller (36) und einem Ventilgehäuse (40), in welchem eine Schließkomponente (41) bewegbar aufgenommen ist, welche Schließkomponente (41) einen in einem Strömungskanal (32.1, 32.2) bewegbaren, druckbeaufschlagten Ventilkörper (42) und ein schaltbares Dichtelement (44) aufweist, wobei in einer ersten Schaltstufe (74) der Schließkomponente (41) das Dichtelement (44) durch den Steller (36) zur Freigabe mindestens einer Bohrung (45) zu einem abströmseitigen Abschnitt (32.2) des Strömungskanals im Ventilkörper (42) aus diesem zurückgestellt ist und in einer zweiten Schaltstufe (76) der Schließkomponente (41) der Ventilkörper (42) einen Strömungsquerschnitt (84) zu dem abströmseitigen Abschnitt (32.2) des Strömungskanals freigibt, wobei der Ventilkörper (42) den Strömungsquerschnitt (84) nach einer Druckabsenkung in einer Kammer (78) zwischen Ventilkörper (42) und Dichtelement (44) in der zweiten Schaltstufe (76) freigibt, welche Druckabsenkung dadurch erfolgt, dass mehr Luft aus der Kammer (78) über die mindestens eine Bohrung (45) in den abströmseitigen Abschnitt (32.2) des Strömungskanals abströmt, als über eine Druckausgleichsbohrung (54) in die Kammer (78) nachströmt, und wobei der Ventilkörper (42) an einer einem Dichtbereich (50) zugewandten Fläche mindestens eine Dichtung (48) aufweist, wobei im geschlossenen Zustand des Ventilkörpers (42) der Dichtbereich (50) des Bypassventils verschlossen wird und ein Überströmen der dem Bypassventil (34) zuströmenden Luft in einen abströmseitigen Abschnitt (32.2) des Strömungskanals (32.1, 32.2) verhindert wird, wobei in der ersten Schaltstufe (74) das Dichtelement (44) durch Bestromung des Stellers (36) im Ventilkörper (42) aus diesem zurückgestellt ist, **dadurch gekennzeichnet, dass** der Ventilkörper (42) an seiner dem Dichtbereich (50) abgewandten Seite mit mindestens einer Axialdichtung (56) zusammenwirkt, welche Axialdichtung (56) zusammenwirkend mit dem Ventilkörper das Ventilgehäuse (40) im geschlossenem Zustand des Ventilkörpers (42) abdichtet.

2. Bypassventil gemäß Anspruch 1, **dadurch gekennzeichnet, dass** der Ventilkörper (42) im Wesentlichen glockenförmig ausgebildet ist und das schaltbare Dichtelement (44) umschließt.

3. Bypassventil gemäß Anspruch 1, **dadurch gekennzeichnet, dass** eine projizierte Fläche (43) am Ventilkörper (42) größer ist als eine vom Druck der zuströmenden Luft (22) beaufschlagte Fläche (52) des Ventilkörpers (42).

4. Bypassventil gemäß Anspruch 3, **dadurch gekennzeichnet, dass** der Ventilkörper (42) mindestens eine Bohrung (45) enthält, welche durch das schaltbare Dichtelement (44) verschließbar oder freigebbar ist.

5. Bypassventil gemäß Anspruch 4, **dadurch gekennzeichnet, dass** die Summe der Strömungsquerschnitte der mindestens einen Bohrung (45) im Ventilkörper (42) größer ist als der Strömungsquerschnitt einer Druckausgleichsbohrung (54) im Ventilkörper (42).

6. Bypassventil gemäß Anspruch 1, **dadurch gekennzeichnet, dass** das Dichtelement (44) scheibenförmig ausgeführt ist und über ein Federelement (46) an den Ventilkörper (42) anstellbar ist.

7. Bypassventil gemäß Anspruch 1, **dadurch gekennzeichnet, dass** das Bypassventil (34) nach Aufhebung der Bestromung einer Spule (68) des Stellers (36) in der druckausgeglilchenen zweiten Schaltstufe (76) durch die das Dichtelement (44) beaufschlagende Feder (46) geschlossen wird.

8. Bypassventil gemäß Anspruch 1, **dadurch gekennzeichnet, dass** das Dichtelement (44) mit einer am Ventilkörper (42) ausgeführten Druckausgleichsbohrung (54) zusammenwirkt und mindestens einen in diese eingreifenden Mitnehmer (90) aufweist.

9. Bypassventil gemäß Anspruch 8, **dadurch gekennzeichnet, dass** das Dichtelement (44) den Lufteintritt aus einem zuströmseitigen Abschnitt (32.1) des Strömungskanals in eine Kammer (78) freigibt.

10. Bypassventil gemäß Anspruch 8, **dadurch gekennzeichnet, dass** der Ventilkörper (42) mindestens eine Dichtung (94) mit mindestens einer Bohrung (45) aufweist, wobei die Dichtung (94) in der Deckelfläche des Ventilkörpers (42) unterhalb eines Dichtbereiches (50) angeordnet ist.

11. Bypassventil gemäß Anspruch 9, **dadurch gekennzeichnet, dass** das Dichtelement (44) eine Aufsatzfläche (92) umfasst, die in der ersten Schaltstufe (74) des Bypassventiles (34) den Lufteintritt in die Kammer (78) freigibt.

12. Verwendung des Bypassventiles gemäß einem oder mehrerer der vorhergehenden Ansprüche in einem Bypasskanal einer als Abgasturbolader ausgeführten Aufladeeinrichtung (24) einer Verbrennungskraftmaschine.

## Claims

1. Bypass valve for internal combustion engines for connecting the pressure side to the suction side of a supercharging device (24), having an actuator (36) and a valve housing (40) in which a closing component (41) is held in a movable fashion, which closing component (41) has a valve body (42), which is movable in a flow duct (32.1, 32.2) and which is acted on with pressure, and a switchable sealing element (44), wherein in a first switching stage (74) of the closing component (41), the sealing element (44) is set back out of the valve body (42) by the actuator (36) in order to open up at least one bore (45) in the valve body (42) to an outflow-side section (32.2) of the flow duct, and in a second switching stage (76) of the closing component (41), the valve body (42) opens up a flow cross section (84) to the outflow-side section (32.2) of the flow duct, wherein the valve body (42) opens up the flow cross section (84) after a pressure drop in a chamber (78) between the valve body (42) and sealing element (44) in the second switching stage (76), which pressure drop occurs by virtue of more air flowing out of the chamber (78) via the at least one bore (45) into the outflow-side section (32.2) of the flow duct than flows into the chamber (78) via a pressure compensating bore (54), and wherein the valve body (42) has at least one seal (48) on a surface facing towards a sealing region (50), wherein, in the closed state of the valve body (42), the sealing region (50) of the bypass valve is closed off, and the air flowing to the bypass valve (34) is prevented from flowing over into an outflow-side section (32.2) of the flow duct (32.1, 32.2), wherein, in the first switching stage (74), the sealing element (44) is set back out of the valve body (42) by means of a supply of electrical current to the actuator (36) in the valve body (42), **characterized in that** the valve body (42) interacts on its side facing away from the sealing region (50) with at least one axial seal (56), which axial seal (56), in interaction with the valve body, seals off the valve housing (40) when the valve body (42) is in the closed state.

2. Bypass valve according to Claim 1, **characterized in that** the valve body (42) is formed substantially in the shape of a bell and surrounds the switchable sealing element (44).

3. Bypass valve according to Claim 1, **characterized in that** a projected surface (43) on the valve body (42) is larger than a surface (52) of the valve body (42) acted on by the pressure of the inflowing air (22).

4. Bypass valve according to Claim 3, **characterized in that** the valve body (42) comprises at least one bore (45) which can be closed off or opened up by the switchable sealing element (44).

5. Bypass valve according to Claim 4, **characterized in that** the sum of the flow cross sections of the at least one bore (45) in the valve body (42) is larger than the flow cross section of a pressure compensating bore (54) in the valve body (42).

6. Bypass valve according to Claim 1, **characterized in that** the sealing element (44) is of disc-shaped design and can be loaded against the valve body (42) by means of a spring element (46).

7. Bypass valve according to Claim 1, **characterized in that**, after the elimination of the supply of electrical current to a coil (68) of the actuator (36) in the pressure-balanced second switching stage (76), the bypass valve (34) is closed by the spring (46) which acts on the sealing element (44).

8. Bypass valve according to Claim 1, **characterized in that** the sealing element (44) interacts with a pressure compensating bore (54) formed on the valve body (42), and has at least one driver (90) which engages into said pressure compensating bore (54).

9. Bypass valve according to Claim 8, **characterized in that** the sealing element (44) opens up the air inlet from an inflow-side section (32.1) of the flow duct into a chamber (78).

10. Bypass valve according to Claim 8, **characterized in that** the valve body (42) has at least one seal (94) having at least one bore (45), with the seal (94) being arranged in the top surface of the valve body (42) below a sealing region (50).

11. Bypass valve according to Claim 9, **characterized in that** the sealing element (44) comprises a seat surface (92) which, in the first switching stage (74) of the bypass valve (34), opens up the air inlet into the chamber (78).

12. Use of the bypass valve according to one or more of the preceding claims in a bypass duct of a supercharging device (24), which is designed as an exhaust-gas turbocharger, of an internal combustion engine.

## Revendications

1. Soupape de dérivation pour moteurs à combustion interne pour la connexion du côté pression au côté aspiration d'un dispositif de suralimentation (24) avec un actionneur (36) et un boîtier de soupape (40), dans lequel est reçu de manière déplaçable un composant de fermeture (41), lequel composant de fermeture (41) présente un corps de soupape (42) déplaçable dans un canal d'écoulement (32.1, 32.2), sollicité en pression et un élément d'étanchéité commutable (44), l'élément d'étanchéité (44), dans une première étape de commutation (74) du composant de fermeture (41), pour libérer au moins un alésage (45) vers une portion de sortie (32.2) du canal d'écoulement dans le corps de soupape (42), étant ramené par l'actionneur (36) hors de celui-ci, et, dans une deuxième étape de commutation (76) du composant de fermeture (41), le corps de soupape (42) libérant une section transversale d'écoulement (84) vers la portion de sortie (32.2) du canal d'écoulement, le corps de soupape (42) libérant la section transversale d'écoulement (84) après une diminution de la pression dans une chambre (78) entre le corps de soupape (42) et l'élément d'étanchéité (44) dans la deuxième étape de commutation (76), laquelle diminution de pression a lieu par le fait que plus d'air s'écoule hors de la chambre (78) par le biais de l'au moins un alésage (45) dans la portion de sortie (32.2) du canal d'écoulement qu'il n'en revient par le biais d'un alésage de compensation de pression (54) dans la chambre (78), et le corps de soupape (42) présentant au niveau d'une surface tournée vers une région d'étanchéité (50) au moins une garniture d'étanchéité (48), la région d'étanchéité (50) de la soupape de dérivation étant fermée dans l'état fermé du corps de soupape (42) et un débordement de l'air s'écoulant vers la soupape de dérivation (34) dans une portion de sortie (32.2) du canal d'écoulement (32.1, 32.2) étant empêché dans la première étape de commutation (74), l'élément d'étanchéité (44) étant ramené hors du corps de soupape (42) par une alimentation en courant de l'actionneur (36) dans le corps de soupape (42), **caractérisée en ce que** le corps de soupape (42) coopère au niveau de son côté opposé à la région d'étanchéité (50) avec au moins une garniture d'étanchéité axiale (56), laquelle garniture d'étanchéité axiale (56), dans l'état fermé du corps de soupape (42), ferme hermétiquement le boîtier de soupape (40) en coopérant avec le corps de soupape.

2. Soupape de dérivation selon la revendication 1, **caractérisée en ce que** le corps de soupape (42) est réalisé essentiellement en forme de cloche et entoure l'élément d'étanchéité commutable (44).

3. Soupape de dérivation selon la revendication 1, **caractérisée en ce qu'**une surface projetée (43) sur le corps de soupape (42) est supérieure à une surface (52) du corps de soupape (42) sollicitée par la pression de l'air affluant (22).

4. Soupape de dérivation selon la revendication 3, **caractérisée en ce que** le corps de soupape (42) contient au moins un alésage (45) qui peut être fermé ou libéré par l'élément d'étanchéité commutable (44).

5. Soupape de dérivation selon la revendication 4, **caractérisée en ce que** la somme des sections transversales d'écoulement de l'au moins un alésage (45) dans le corps de soupape (42) est supérieure à la section transversale d'écoulement d'un alésage de compensation de la pression (54) dans le corps de soupape (42).

6. Soupape de dérivation selon la revendication 1, **caractérisée en ce que** l'élément d'étanchéité (44) est réalisé en forme de disque et peut être appliqué par un élément de ressort (46) contre le corps de soupape (42).

7. Soupape de dérivation selon la revendication 1, **caractérisée en ce que** la soupape de dérivation (34), après la suppression de l'alimentation en courant d'une bobine (68) de l'actionneur (36) dans la deuxième étape de commutation (76) compensée en pression est fermée par le ressort (46) sollicitant l'élément d'étanchéité (44).

8. Soupape de dérivation selon la revendication 1, **caractérisée en ce que** l'élément d'étanchéité (44) coopère avec un alésage de compensation de la pression (54) réalisé sur le corps de soupape (42) et présente au moins un dispositif d'entraînement (90) venant en prise dans celui-ci.

9. Soupape de dérivation selon la revendication 8, **caractérisée en ce que** l'élément d'étanchéité (44) libère l'entrée d'air hors d'une portion d'afflux (32.1) du canal d'écoulement dans une chambre (78).

10. Soupape de dérivation selon la revendication 8, **caractérisée en ce que** le corps de soupape (42) présente au moins une garniture d'étanchéité (94) avec au moins un alésage (45), la garniture d'étanchéité (94) étant disposée dans la surface de couvercle du corps de soupape (42) en dessous d'une région d'étanchéité (50).

11. Soupape de dérivation selon la revendication 9, **caractérisée en ce que** l'élément d'étanchéité (44) comprend une surface de pose (92) qui, dans la première étape de commutation (74) de la soupape de dérivation (34), libère l'entrée d'air dans la chambre (78).

12. Utilisation de la soupape de dérivation selon l'une quelconque ou plusieurs des revendications précédentes dans un canal de dérivation d'un dispositif de suralimentation (24) réalisé sous forme de turbocompresseur à gaz d'échappement d'un moteur à combustion interne.
